# EUROPEAN PATENT SPECIFICATION

(11) **EP 1 703 718 B1**
(45) Date of publication and mention of the grant of the patent: **04.09.2013**
(21) Application number: 06014264.3
(22) Date of filing: 10.09.2002
(51) Int. Cl.: H04N 1/60

(54) **Output image adjustment of image data**
Bildausgabekorrektur von Bilddaten
Correction d'une image de sortie à partir de données d'image

(30) Priority: 11.09.2001 JP 2001275169; 12.07.2002 JP 2002203591
(43) Date of publication of application: 20.09.2006
(62) Divisional of application: 02020239.6
(73) Proprietor: Seiko Epson Corporation, Shinjuku-ku Tokyo 163-0811 (JP)
(72) Inventor: Fukasawa, Kenji, Suwa-shi Nagano-ken 392-8502 (JP)
(74) Representative: Winter, Brandl, Fürniss, Hübner, Röss, Kaiser, Polte - Partnerschaft

(56) References cited:
- EP-A- 1 271 404
- US-A- 5 754 746
- US-A- 6 091 518
- "Adobe Photoshop 5.0 User Guide" ADOBE PHOTOSHOP 5.0 USER GUIDE, XX, XX, 1998, pages 79-101, XP002205204

## Description

### BACKGROUND OF THE INVENTION

### TECHNICAL FIELD

The present invention relates to a technique for processing image data.

### BACKGROUND ART

In contrast to ordinary photosensitive silver salt color cameras whose typical output mode is printing onto photographic paper, digital still camera (DSC) and digital video camera (DVC) photographs, and digital images input by a scanner, have the advantage that images can be manipulated easily on a personal computer.

However, if image processing is not performed properly, some data in the source image may be lost, resulting in degraded quality of image data. For example, range adjustment is typically done to improve contrast, but if range adjustment is performed in a color space (color representation system) in which highly saturated colors are represented by negative color values, the negative color values wind up being clipped to zero, so that high saturation information is lost.

Proper image processing requires properly setting the working color space for processing of image data, but setting working color space properly requires advanced knowledge of image processing. Further, designating a desired color space for the working color space requires the user to designate the working color space using advanced retouching software, a tedious process.

Using a working color space that has a wider color representation range than the color space of the source image data is useful in improving saturation, but on the other hand tends to depress tone characteristics; compensating for depressed tone characteristics requires setting parameters that affect image qualities to proper values, and setting parameter values appropriately for image data requires a knowledge of image processing.

Also, if a wider working color space is simply selected without regard to the reproducible color range of the output device used to output image data, it may be impossible to accurately reproduce the colors of the image data, so that the advantages of using a wider color space are lost.

Document EP-A-1 271 404, which was published after the application date of the present application, describes an image output system, in which image data generated by a digital still camera is output with a color printer. The digital still camera stores image processing control data pre-set by a maker of the digital still camera to be changeable for each image, and a user's setting of offset data. The processing control data include a parameter "target color space", which is a parameter for specifying the color space used in the series of image processing according to the color space used in the process of generating the image data, for example, sRGB color space or NTSC color space. The image output system then generates an image file including the image data, the image processing control data, and the offset data. The color printer makes the image data to be subjected to a preset series of image processing based on the image processing control data in the image file, and outputs a resulting processed image. The series of image processing includes converting the image data in the YCbCr color space into image data in an sRGB color space, converting the image data in the sRGB color space into an XYZ color space (target color space) and converting the color space of the image data of the XYZ into a wRB color space (working color space), wherein the wRGB color space is wider than the sRGB color space.

In "Adobe Photoshop 5.0 User Guide", 1998, pages 79-101 there is described converting the color space of open images from any color space to the color spaces defined in the RGB setup, Grayscale setup, and CMYK setup dialog boxes according to a program which runs on a computer.

Document US-A-6 091 518 describes an image transfer apparatus which co-operates with an image reception and reproduction means to reduce network burden while transferring profile information. A profile storage device is connected to a network. The profile storage device stores profile information for a color correction made to color image information. An image transmission device transmits profile specification information specifying the profile information corresponding to the color image information together with the color image information. A receiving device receives the color image information and the profile specification information. A color correction device then uses the profile information to make a color correction in the color image information. A reproducing device then reproduces the color-corrected image information.

The above problems are addressed by the present invention, which has as an object to provide an image processing device that enables image processing to be accomplished simply, in an appropriate working color space, with reference to particular image data, an image processing system including the image processing device, and a program for executing corresponding image processing. The object is solved by the features of the independent claims. The dependent claims are directed to preferred embodiment of the invention.

The invention provides an image processing device as defined in claim 1.

According to the image processing device image data can be processed using a color space in accordance with working color space designating information associated with the image data. It is therefore a simple matter to process image data using an appropriate working color space, and thus improve the result of image processing.

In the image processing device, said image data may additionally be associated with image processing control data for designating image processing conditions in said image processing unit; and image processing by said image processing unit performed on the basis of said image processing control data. With this arrangement, image processing can be performed appropriately for individual sets of image data, under designated processing conditions in a designated working color space.

In the image processing device, in the event that said image processing unit is unable to use said working color space designating information, processing of said image data may be performed using a predetermined color space. With this arrangement, in the event that working color space designating information cannot be used, image processing can be performed in a predetermined color space.

In the image processing device, in the event that said image processing unit is unable to use said working color space designating information, processing of said image data may be performed using the color space defining said acquired image data. With this arrangement, image processing can at a minimum be performed in the color space defining the image data.

The image processing device may further comprise a multitude of output image data generating means for generating, from said processed image data, output image data for transmission to an output device; an output image generating means selection unit for selecting from among said multitude of output image data generating means a said output image data generating means corresponding to said retrieved working color space; and a transmitting unit for transmitting to said output device output image data generated by said selected output image generating means. With this arrangement, output image data can be generated using an output image generating means appropriate for a particular working color space.

In the image processing device said output image data generating means may use color conversion tables to convert said processed image data to said output image data. With this arrangement, color conversion from processed image data to output image data can be accomplished faster and more accurately.

The image processing device may further comprise an output image data generating unit for converting image data of predetermined color space to output image data of a color space used by an output device; and a color space conversion unit for converting the color space of said processed image data to said predetermined color space. With this arrangement, image data of a working color space can be converted to image data of a predetermined color space that can be handled by an output image data generating unit (output device driver), enabling output image data to be output with reference to various output devices. Thus, the image processing device can be made compatible with a variety of output devices.

In the image processing device, said image data may additionally be associated with image processing control data designating image processing conditions for said image processing unit; and image processing by said image processing unit performed on the basis of said image processing control data. With this arrangement, image processing can be performed appropriately for individual sets of image data, under designated processing conditions in a designated working color space.

The invention further provides a program for executing processing of image data as defined in claim 16.

The program affords working effects similar to the image processing device.

Like the image processing device, the program may be reduced to practice in various ways.

The invention further provides an image processing system as defined in claim 15.

According to the image processing system, through cooperation of the image processing device and output data generating means, there are afforded working effects similar to the image processing device; and like the image processing deviceit may be reduced to practice in various ways.

The image processing device may further comprise a first color conversion unit for converting the color space of acquired image data to a first RGB color space in accordance with working color space designating information, said image processing unit for processing said image data in said first RGB color space; a color space information acquisition unit for acquiring information about an RGB color space used by an output image processing device that generates from said processed image data image data for output; and a second color conversion unit that, in the event that the RGB color space used by said output image processing device is a second RGB color space different from said first RGB color space, converts the color space of said processed image data from said first RGB color

space to said second RGB color space on the basis of said acquired color space information.

In the image processing device said acquired image data may be image data defined in a third RGB color space; and said image processing unit, in the event of being unable to use said working color space designating information, may process said image data in said third RGB color space.

In the image processing device said first RGB color space may have at least in a portion of the gamut thereof a color representation range wider than said third RGB color space. This enables image processing that preserves the saturation of the source image data, enabling output of highly saturated images.

The image processing device may further comprise a first color conversion unit for converting the color space of acquired image data to a YCbCr color space in accordance with working color space designating information, said image processing unit for processing said image data in said first color space; a color space information acquisition unit for acquiring information about an RGB color space used by an output image processing device that generates from said processed image data image data for output; and a second color conversion unit for converting, on the basis of said acquired color space information, the color space of said processed image data from said YCbCr color space to an RGB color space used by said output image device.

The image processing device may further comprise a first color conversion unit for converting the color space of acquired image data to an RGB color space in accordance with said working color space designating information, said image processing unit for processing said image data in said RGB color space; a color space information acquisition unit for acquiring information about a YCbCr color space used by an output image processing device that generates from said processed image data image data for output; and a second color conversion unit for converting, on the basis of said acquired color space information, the color space of said processed image data from said RGB color space to said YCbCr color space.

The image processing device may further comprise a first color conversion unit for converting the color space of acquired image data to a first YCbCr color space in accordance with said working color space designating information, said image processing unit for processing said image data in said first YCbCr color space; a color space information acquisition unit for acquiring information about a YCbCr color space used by an output image processing device that generates from said processed image data image data for output; and a second color conversion unit that, in the event that the YCbCr color space used by said output image processing device is a second YCbCr color space different from said first YCbCr color space, converts the color space of said processed image data from said first YCbCr color space to said second YCbCr color space on the basis of said acquired color space information.

### BRIEF DESCRIPTION OF THE FIGURES

Figure 1 is an illustrative diagram of an exemplary image processing system in which the image processing device pertaining to Embodiment 1 may be implemented.
Figure 2 is an illustrative diagram showing the general internal structure of an image file GF stored in the Exif file format.
Figure 3 is an illustrative diagram showing exemplary image processing control information GI parameters stored in Makernote.
Figure 4 is a flow chart showing a main processing routine for image processing in personal computer 20 pertaining to Embodiment 1.
Figure 5 is a flow chart showing the flow of image processing based on color space information in personal computer 20 pertaining to Embodiment 1.
Figure 6 is a flow chart showing the flow of normal image processing in personal computer 20 pertaining to Embodiment 1.
Figure 7 is a flow chart showing the flow of a print data generating process in personal computer 20 pertaining to Embodiment 1.
Figure 8 is a flow chart showing the flow of image processing based on color space information in personal computer 20 pertaining to Embodiment 2.
Figure 9 is a flow chart showing the flow of normal image processing in personal computer 20 pertaining to Embodiment 2.
Figure 10 is a flow chart showing the flow of a print data generating process in personal computer 20 pertaining to Embodiment 2.

### DESCRIPTION OF THE PREFERRED EMBODIMENTS

A fuller understanding of the image processing device of the invention is provided through the following description of the embodiments, made with reference to the accompanying drawings.
A. Arrangement of image processing system including image processing device pertaining to Embodiment 1
B. Image processing in image processing device pertaining to Embodiment 1
C. Image processing in image processing device pertaining to Embodiment 2
D. Other embodiments

### A. Arrangement of image processing system including image processing device pertaining to Embodiment 1

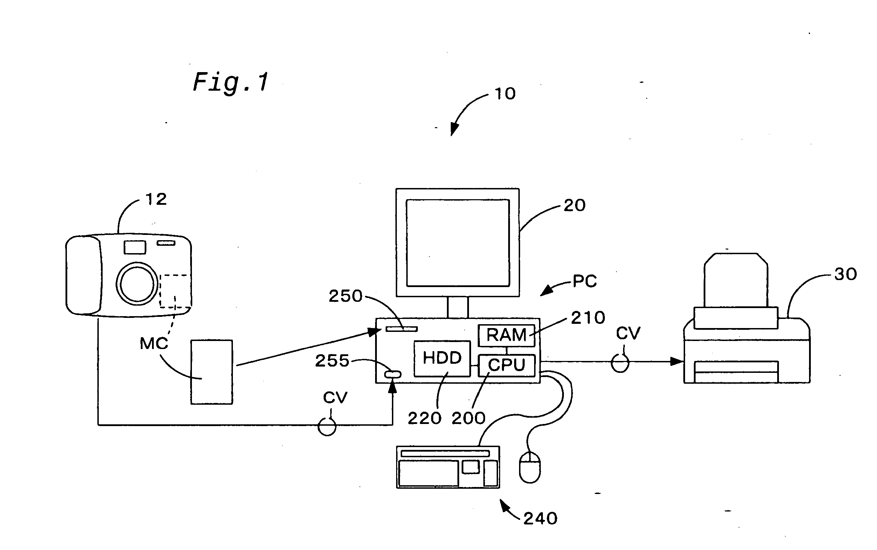

The following description of the arrangement of an image processing system in which an image processing device pertaining to a first embodiment may be implemented makes reference to Fig. 1. Fig. 1 is an illustrative diagram of an exemplary image processing system in which the image processing device pertaining to Embodiment 1 may be implemented.

Image processing system 10 comprises a digital still camera 12 serving as an input device for generating data GD to which image processing conditions will be appended; a personal computer 20 serving as an image processing device that performs image processing, described later, using image data GD generated by digital still camera 12; and a color printer 30 serving as the image output device for personal computer 20. In the image processing device pertaining to this embodiment, image data GD (image file GF) for processing is input from digital still camera 12 to personal computer 20 via a connector cable CV or memory card MC.

Instead of a personal computer 20, the image processing device could also be, for example, a stand-alone printer having an image processing function. Instead of a printer 30, the output device could be a display device, e.g. a CRT or LCD display, a projector, or the like. In the following description, the output device is assumed to be a color printer 30 connected to a personal computer 20.

Personal computer 20 is a computer of the type used ordinarily, comprising a CPU 200 for executing the image processing program pertaining to the invention; RAM 210 for temporarily storing results of operations in CPU 200, image data, etc.; a hard disk drive (HDD) 220 storing the image processing program; a display device 230 for displaying results of operations in CPU 200, image data, etc.; and input devices, namely, a keyboard and mouse, for entering commands, numerical values etc. Personal computer 20 also has a memory slot 250 for inserting a memory card MC, and an I/O terminal 255 for connection to a connector cable CV from digital still camera 12 etc.

Digital still camera 12 converts optical information to an analog electrical signal by means of a CCD or photomultiplier, and converts the resultant analog electrical signal to a digital signal with an A/D converter to generate digital image data. Digital image data so generated is typically stored on a memory card MC serving as the storage device. The format for storing image data in digital still camera 12 is typically the JPEG format, but other storage formats could be employed, such as TIFF, GIF, BMP, or RAW data format.

The digital still camera 12 in accordance with the present embodiment generates an image file in which is embedded, for each set of image data GD, image processing control information GI consisting of working color space information that designates a working color space for performing image processing in an image processing device (computer, printer). Work color space may be selected arbitrarily via a liquid crystal screen etc. provided to digital still camera 12, or designated by default in digital still camera 12 to a predetermined working color space. The designated working color space is advantageously an RGB color space having a wider color representation range than the color space of image data GD, i.e., wider than the RGB color space of digital still camera 12. Digital still camera 12 may also select or generate image processing control information GI with reference to the designated working color space. In terms of achieving more appropriate image processing, it is desirable to optimize image processing control information GI for each working color space.

Image data GD generated by digital still camera 12 typically has a data structure in accordance with the format specified for digital still cameran image files (Exif). The Exif file specification was developed by the Japan Electronics and Information Technology Industries Association (JEITA).

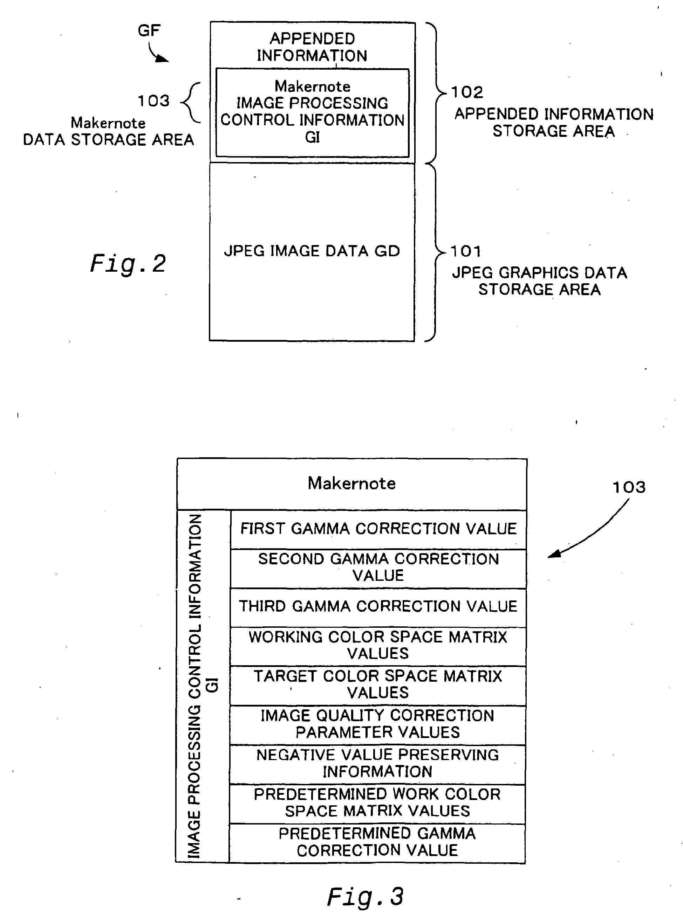

The following description of general structure in an image file having a file format in accordance with the Exif file format makes reference to Figs. 2 and 3. Fig. 2 is an illustrative diagram showing the general internal structure of an image file GF stored in the Exif file format. Fig. 3 is an illustrative diagram showing exemplary image processing control information GI parameters stored in an extension information storage area. The terms "file structure", "data structure" and "storage area" herein refer to files, data etc. stored in a memory device in file or datan image form.

Image file GF, here, an Exif file, includes a JPEG image data storage area 101 containing image data GD in JPEG format; and an extension information storage area 102 containing appended information of various kinds relating to the stored JPEG image data GD. Appended information storage area 112 contains information relating to settings when the JPEG image was shot (e.g. color space at shooting, shooting date, exposure, shutter speed, etc.), and thumbnail image data for JPEG images stored in JPEG image data storage area 101. When image data GD is written to a memory card MC, this appended information is automatically stored in appended information storage area 102. In this embodiment, appended information storage area 102 also has an image processing control information storage area 103, shown in Fig. 3, for storing image processing control information Gl used to control image processing of image data GD in personal computer 20.

Image processing control information Gl may also be stored in a Makernote data storage area 103 --this is an undefined area currently left available by DSC manufacturers-- in appended information storage area 102.

Image processing control information GI contains information that, in consideration of the color reproduction characteristics and image output characteristics of an output device such as printer 30, indicates image output conditions that will give optimal image output result. Information contained by way of image processing control information GI may include, for example, working color space matrix values designating a working color space for image processing by personal computer 20; a second gamma correction value (working color space gamma correction value); target color space matrix values designating a target color space; a first gamma correction value (DSC gamma correction value); a third gamma correction value (printer color space gamma correction value); matrix values for a predetermined working color space; and a predetermined gamma correction value (gamma correction value for a predetermined working color space); as well as other parameters relating to image quality such as contrast, color balance adjustment, sharpness, and color correction.

Color printer 20 is capable of color image output, for example, an ink-jet printer that forms images by ejecting inks of four colors --for example, cyan (C), magenta (M), yellow (Y) and black (K)-- onto a print medium to produce a dot pattern; or an electrophotographic printer that produces images by transferring and fixing color toner onto a print medium. Besides the four colors listed above, light cyan (LC), light magenta (LM), or dark yellow (DY) may also be used.

### B. Image processing in image processing device pertaining to Embodiment 1

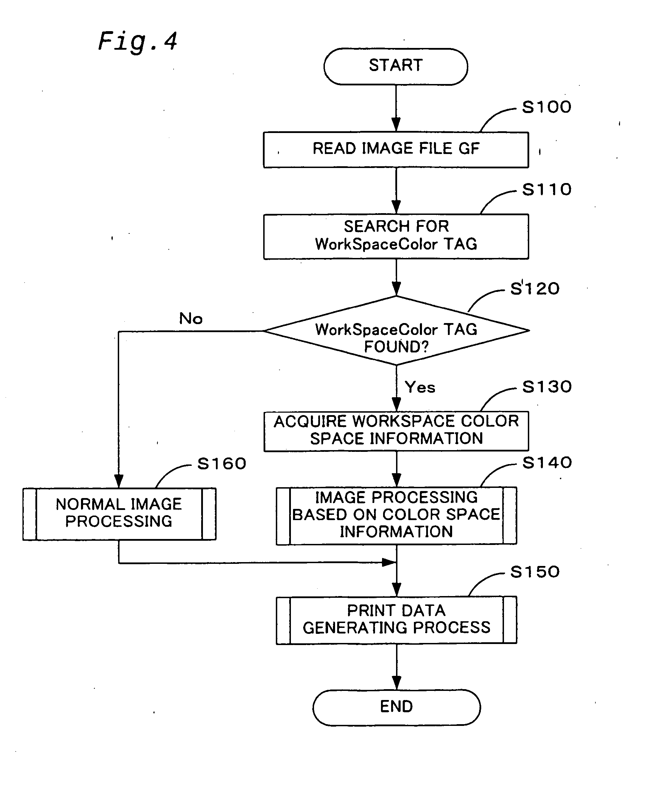

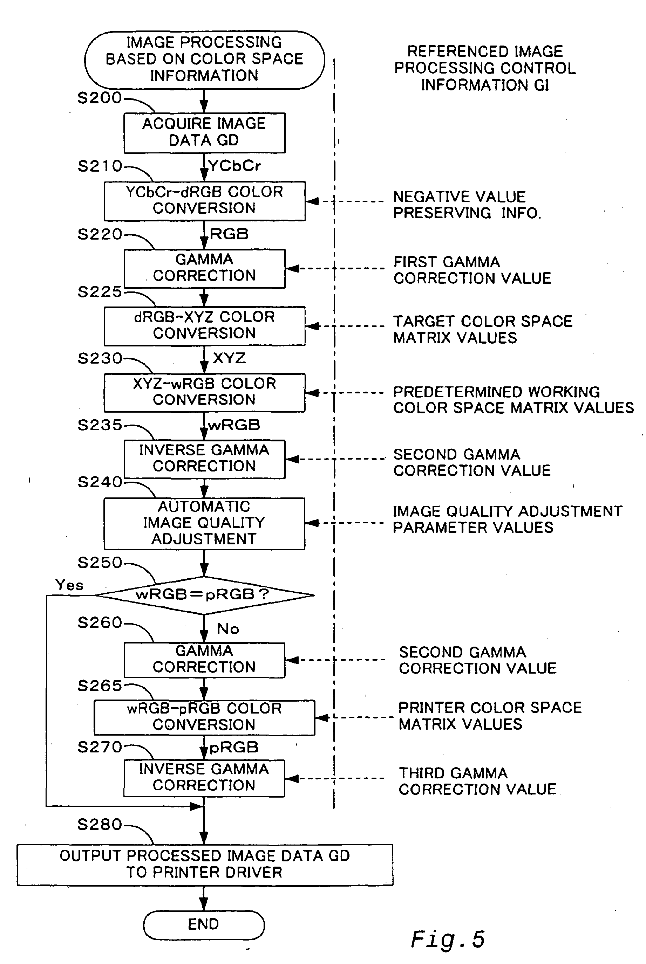

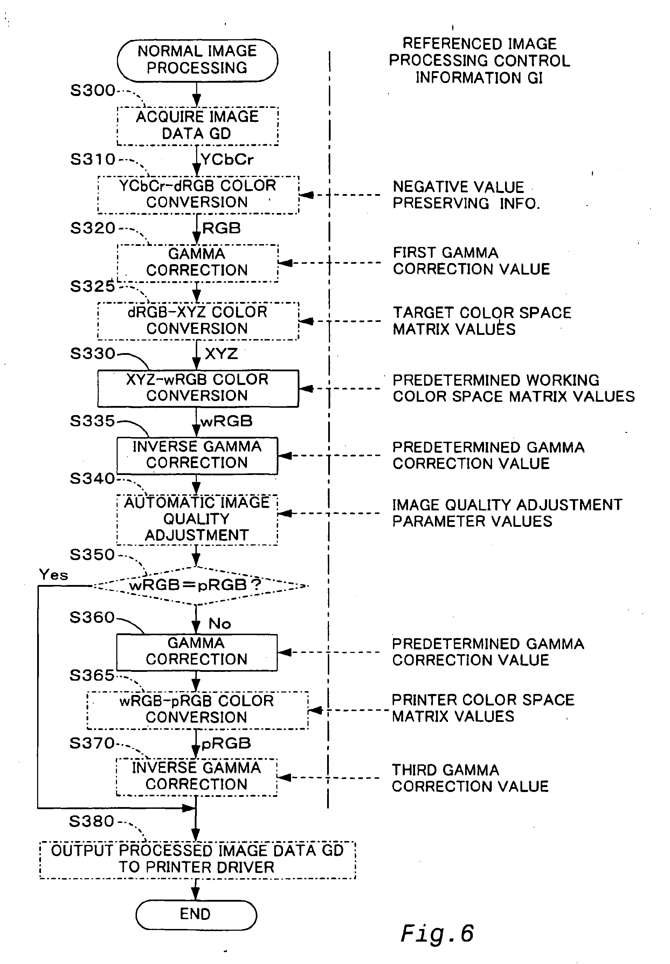

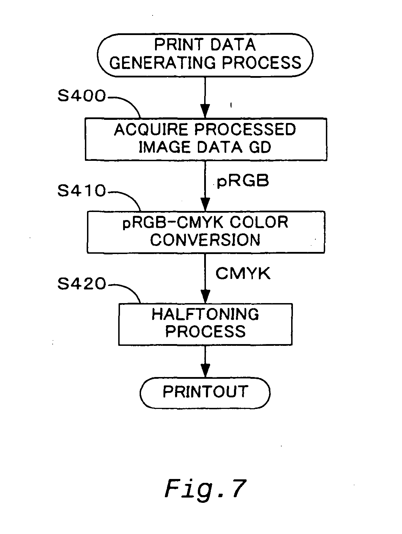

Image processing in personal computer 20 pertaining to Embodiment 1 is now described with reference to Figs. 4 -7. Fig. 4 is a flow chart showing a main processing routine for image processing in personal computer 20 pertaining to Embodiment 1. Fig. 5 is a flow chart showing the flow of image processing based on color space information in personal computer 20. Fig. 6 is a flow chart showing the flow of normal image processing in personal computer 20. Fig. 7 is a flow chart showing the flow of a print data generating process in personal computer 20.

When, for example, a memory card MC is inserted into slot 250, or the other end of a connector cable CV connected to DSC 12 is connected to I/O terminal 255, CPU 200 of personal computer 20 runs an application for executing the main processing routine. The following processes are executed in accordance with the processing steps of the application. CPU 200 reads the image file GF from memory card MC via slot 250 or connector cable CV, and temporarily places the read image file GF in RAM 210 (Step S100). CPU 200 acquires the image processing control information GI from the image file GF and searches for a WorkSpaceColor tag designating a working color space for image processing (Step S110). If CPU 200 successfully finds a WorkSpaceColor tag (Step S120: Yes) it acquires, from the designated working color space information, working color space matrix values and a second gamma correction value which is the gamma correction value for the designated working color space (Step S130). CPU 200 then executes image processing (described in detail hereinbelow) of image data GD contained in the image file GF, using the acquired working color space matrix values (Step S140). In addition to working color space matrix values, CPU 200 also acquires parameter values designating image processing conditions, including the parameter values given in Fig. 3. CPU 200 generates print data from the processed image data GD for output to printer 30 (Step S150) and terminates the main processing routine.

In the event that a WorkSpaceColor cannot be found, (Step S120: No), CPU 200 instead acquires from image processing control information Gl predetermined working color space matrix values and a predetermined gamma correction value which is the gamma correction value for the predetermined working color space, and executes image processing of image data GD contained in the image file GF, using the predetermined working color space matrix values (Step S160). CPU 200 generates print data from the processed image data GD for output to printer 30 (Step S150) and terminates the main processing routine.

The following detailed description of image processing using designated working color space information makes reference to Fig. 7. CPU 200 acquires image data GD from the read out image file GF (Step S200). Digital still camera 12, as noted previously, stores image data GD as a file of JPEG format, and in a JPEG file, the color space of the generated image data GD (RGB color space) in converted to a YCbCr color space in order to increase compression. Accordingly, CPU 200 executes a YCbCr-dRGB color conversion process to convert the YCbCr image data GD to dRGB image data GD, dRGB being the color space used in DSC 12 (Step S210). In performing the color conversion, a matrix operation is performed using a matrix S, defined in the JPEG File Interchange Format (JFIF) specification.

When performing operations using matrix S, CPU 200, in accordance with negative value preserving information acquired as image processing control information GI, preserves negative data values (color values) included in the converted RGB image data GD and positive appended data values (color values) that lie outside the gamut of the particular RGB color space, or clips them to the gamut of the particular RGB color space. The particular RGB color space is, for example, the sRGB color space, which is commonly employed in standard operating systems (OS). Negative value preserving information may be handled as working color space designating information. Where a color space having the same coordinate system as the image data GD color space serving as the working color space (sRGB, for example) is designated, by including information for preserving color values that are out of gamut with respect to the image data GD color space (i.e., negative color values and positive appended data values) during image processing, negative color values can be treated as valid values, at least during image processing, making it possible to prevent deterioration in image qualities (such as saturation).

To linearize the relationship with XYZ values, CPU 200 performs gamma correction of the resultant dRGB image data GD, using a first gamma correction value designated in the image processing control information Gl (Step S220). CPU 200 applies matrix values of a target color space designated by image processing control information GI to matrix values making up a matrix M, to execute a dRGB-XYZ color conversion process (Step S225). Matrix M is a 3 x 3 matrix.

To perform image adjustment based on selected image adjustment parameters, CPU 200 executes a process to convert the color space of the image data GD from the XYZ color space to the wRGB color space designated as the working color space, i.e. an XYZ-wRGB color conversion process (Step S230). This color conversion is accomplished by an operation using an inverse matrix N⁻¹ that is the inverse of the 3 x 3 matrix N defining wRGB to XYZ color conversion. CPU 200 handles matrix values of the working color space designated by the image processing control information Gl as matrix values of matrix N when performing the inverse matrix operation. CPU 200 performs inverse gamma correction using a second gamma correction value that is a gamma correction value for the working color space designated by the image processing control information GI (Step S235).

The dRGB image data is converted to wRGB image data by means of color conversion via the XYZ color space. For the purposes of description herein, matrix operations performed with matrix M and inverse matrix N⁻¹ are described as being independent operations, but in actual practice, a combined matrix could be generated from matrix M and inverse matrix N⁻¹, and dRGB-wRGB color conversion performed with this combined matrix MN⁻¹, to speed up operations.

The color space of the image data GD resulting from the inverse matrix N⁻¹ operation, namely, the working color space, is the wRGB color space. In preferred practice, this wRGB color space will have a gamut wider than the sRGB color space. Where the gamut of the wRGB color space is wider than the commonly used sRGB color space, negative color values and positive appended color values not included in the sRGB color space can be included in the gamut of the wRGB color space, allowing saturation not reproducible with the sRGB color space to be reproduced, so that the original high saturation of image data GD can be reproduced.

By using as the working color space an RGB color space whose gamut includes more color values, the results of subsequent image adjustment can be improved.

In order to characterize image qualities, CPU 200 now performs an automatic image quality adjustment process with the working color space wRGB designated by the image processing control information GI (Step S240). This process is performed using arbitrarily set image quality adjustment parameters included in the image processing control information GI. When performing automatic image quality adjustment, CPU 200 analyzes the characteristics of image data GD, and adjusts image data GD image quality adjustment parameters to reflect image quality adjustment parameters designated in the image processing control information Gl, so as to reduce or eliminate differences between baseline values established for the parameters and values of parameters representing image qualities of image data GD. Image quality adjustment parameter values are used to modify baseline values, or change the extent (level) of reduction in differences between baseline values and image quality parameter values. Alternatively, they are used to directly modify image quality parameter values.

CPU 200 now determines whether the pRGB color space (the color space of printer 30) matches the wRGB color space (Step S250). Specifically, it determines whether the RGB-CMYK color conversion look-up table (LUT) used by the printer driver for printer 30 corresponds to the wRGB color space designated as the working color space. Since the RGB-CMYK color conversion LUT is stored on HDD 220 when the printer driver is installed on personal computer 20, CPU 200 can acquire device type information for printer 30 from the printer driver, and acquire the RGB-CMYK color conversion LUT characteristics.

If CPU 200 determines that the pRGB color space and wRGB color space do not match (Step S250: No), it performs a wRGB-pRGB color conversion process to convert wRGB image data to pRGB image data. First, to linearize the relationship with XYZ values, CPU 200 performs gamma correction of the image data GD using a second gamma correction value (Step S260). It then acquires the working color space matrix values from the image processing control information Gl and the printer color space matrix values for printer 30 and performs wRGB-pRGB color conversion (Step S265). As with the dRGB-wRGB color conversion process described previously, this wRGB-pRGB color conversion process is performed via an XYZ color space, using a matrix M' having the working color space matrix values and a matrix N' having the printer color space matrix values. That is, wRGB data is converted to XYZ data by means of a matrix operation using matrix M', and XYZ data is converted to pRGB data by means of a matrix operation using matrix N'.

CPU 200 performs inverse gamma correction using a third gamma correction value that is a gamma correction value for the printer color space from image processing control information GI (Step S270), outputs the image data GD converted to the pRGB color space to the printer driver (Step S280), and terminates the main routine.

If the pRGB color space and wRGB color space are determined to match (Step S250: Yes), the printer driver will be able to handle processed wRGB image data as-is, and so the If CPU 200 outputs the wRGB image data GD to the printer driver (Step S280), and terminates the main routine.

Referring now to Fig. 6, the details of normal image processing, performed when no working color space has been designated, is described. In the normal image processing shown in Fig. 6, processes identical to processes performed during image processing on the basis of working color space information described previously with reference to Fig. 5, namely, Steps 300 -325, Step S340, Step S350, and Steps S365 -S380, are identical to Steps S200 -S225, Step S240, Step S250, and Steps S265 -S280 described previously with reference to Fig. 5; in the drawing these are indicated by broken lines, and not described [where to do so would be redundant].

In Step S325, CPU 200, having performed the dRGB-XYZ color conversion process, performs a process to convert the image data GD color space from the XYZ color space to the wRGB color space, namely, an XYZ-wRGB color conversion process (Step S330). CPU 200 handles matrix values of a predetermined working color space, included in image processing control information GI, as matrix values of matrix N when performing the inverse matrix operation. CPU 200 performs inverse gamma correction using a predetermined gamma correction value that is a gamma correction value for the predetermined working color space included in image processing control information Gl (Step S335).

CPU 200 then executes Step S340 and Step S350, and executes gamma correction using the predetermined gamma correction value to perform the wRGB-pRGB color conversion process (Step S360). It subsequently executes Steps S365 -S380, outputs the processed pRGB color space image data GD to the printer driver, and terminates the main routine.

The following description of the print data generating process makes reference to Fig. 7. The process is typically realized as so-called printer driver function, and may be realized as a separate module from image processing, or a process integrated with image processing. CPU 200 acquires the processed image data GD (Step S400), and, referring to a pwRGB-CMYK conversion look-up table (LUT) stored on HDD 220, converts pRGB image data to CMYK image data (Step S410). That is, it converts image data GD consisting of R · G · B tone values to tone value data for the colors used by printer 30, for example, the six colors C · M · Y · K · LC · LM.

CPU 200 then performs a halftoning process on the CMYK image data (Step S420), sends the image data GD as raster data to the print control portion (not shown) of printer 30, executes print out, and terminates the main routine. An error diffusion method or systematic dithering method is typically used as the method for the halftoning process.

In this embodiment, all image data is performed in personal computer 20, but instead some or all image processing could be performed in printer 30. In this case an application for executing the image processing functions described with reference to Fig. 7 will be stored in a storage device (hard disk, ROM etc.) provided to the printer 30. The printer 30 is supplied with an image file GF, generated by digital still camera 12, via a cable CV or memory card MC. When printer 30 detects insertion of a memory card MC or insertion of a cable CV, the application may load automatically, whereby reading of the image file GF, analysis of image processing control information Gl, and image data GD conversion and adjustment are performed automatically.

By means of image processing by personal computer 20 in accordance with Embodiment 1 described hereinabove, a working color space for performing image processing is established on the basis of image processing control information GI contained in the image file GF, enabling image quality adjustment processing to be performed on image data GD. Thus, image processing (image quality adjustment) may be done using an appropriate working color space for each set of image data GD. For example, by designating as the working color space an RGB color space having a wider gamut than the dRGB color space of the image data GD (the RGB color space used by digital still camera 12), data values (color values) that are out of gamut of the dRGB color space, and particularly negative data values (color values), can be handled as valid, to give printed results having higher saturation. That is, printed results having higher saturation can be obtained by using color information that cannot be reproduced in the dRGB color space due to being out of gamut.

By means of personal computer 20 pertaining to Embodiment 1, image data GD of the wRGB color space (the working color space) can be converted to the printer RGB color space (pRGB color space) corresponding to the RGB-CMYK color conversion LUT used by the printer driver. Thus, image data GD having been subjected to image quality adjustment in a designated working color space can be output correctly to a variety of printers 30. In other words, the image processing device of this embodiment device can be made compatible with a variety of printers.

By means of a digital still camera 12 in accordance with Embodiment 1, there can be generated an image file that contains image data GD and image processing control information GI that designates the color space of the working color space for performing image processing by personal computer 20. Accordingly, the working color space for use by personal computer 20 can be designated by means of digital still camera 12. By designating as the working color space a color space that includes in the gamut thereof all color values of the image data GD, output of image data GD to printer 30 without any loss of saturation is possible.

Designating a working color space in digital still camera 12 allows image processing (image quality adjustment) in personal computer 20 to be performed using the designated working color space, thereby obviating the need for the user to select working color space on personal computer 20, and affording high image quality obtained through designation of working color space in a simple manner.

### C. Image processing in image processing device (personal computer 20) pertaining to Embodiment 2

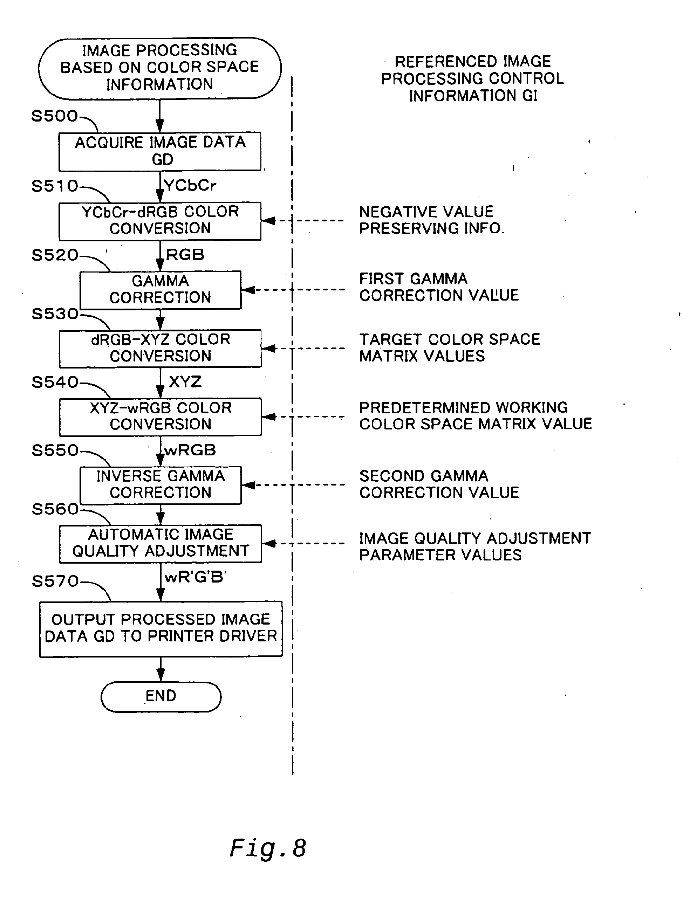

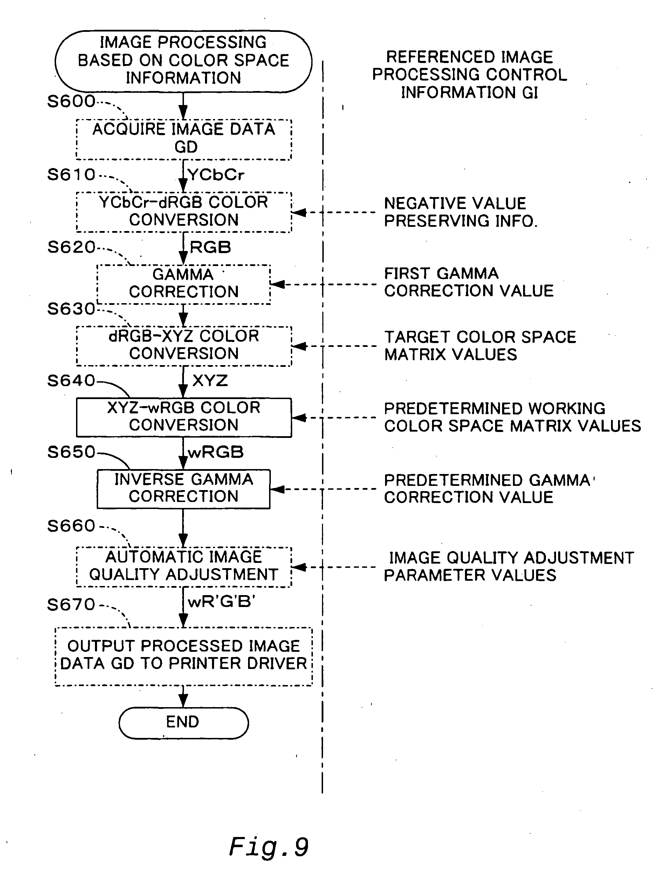

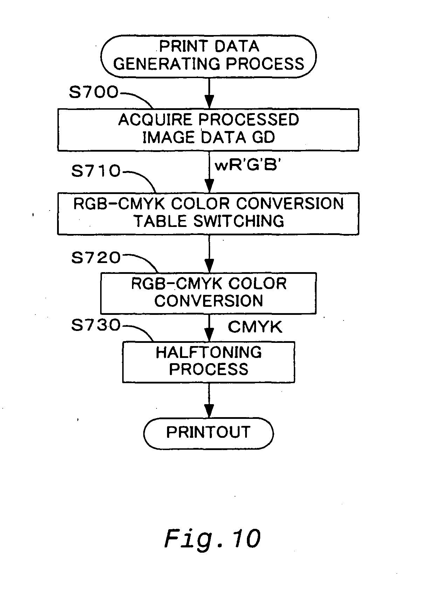

Image processing in personal computer 20 pertaining to Embodiment 2 is now described with reference to Figs. 8 -10. Fig. 8 is a flow chart showing the flow of image processing based on color space information in personal computer 20. Fig. 9 is a flow chart showing the flow of normal image processing in personal computer 20. Fig. 10 is a flow chart showing the flow of a print data generating process in personal computer 20. The main processing routine of image processing in personal computer 20 is similar to the processing routine described with reference to Fig. 4, and will not be described here.

The following detailed description of image processing using designated working color space information makes reference to Fig. 8. CPU 200 acquires image data GD from the read out image file GF (Step S500) and converts the YCbCr image data to dRGB image data, dRGB being the color space used in DSC 12 (Step S510). In performing the color conversion, a matrix operation is performed using a matrix S, defined in the JPEG File Interchange Format (JFIF) specification.

When performing operations using matrix S, CPU 200 refers to negative value preserving information acquired as image processing control information GI, and in accordance with this negative value preserving information performs clipping of the image data GD. CPU 200 performs gamma correction of the resultant dRGB image data GD, using a first gamma correction value designated by the image processing control information Gl (Step S520), and applies matrix values of a target color space, also designated by image processing control information GI, to matrix values making up a matrix M, to execute a dRGB-XYZ color conversion process (Step S530).

To perform image adjustment based on selected image quality adjustment parameters, CPU 200 executes a process to convert the color space of the image data GD from the XYZ color space to the wRGB color space designated as the working color space, i.e. an XYZ-wRGB color conversion process (Step S540). CPU 200 then performs inverse gamma correction using a second gamma correction value that is a gamma correction value for the working color space designated by the image processing control information Gl (Step S550).

The dRGB image data is converted to wRGB image data by means of color conversion via the XYZ color space. For the purposes of description herein, matrix operations performed with matrix M and inverse matrix N⁻¹ are described as being independent operations, but in actual practice, a combined matrix could be generated from matrix M and inverse matrix N⁻¹, and dRGB-wRGB color conversion performed with this combined matrix MN⁻¹, to speed up operations.

In order to characterize image qualities, CPU 200 now performs an automatic image quality adjustment process with the working color space wRGB designated by the image processing control information GI (Step S560). This process is performed using arbitrarily set image quality adjustment parameters included in the image processing control information GI. CPU 200 outputs the wRGB image data to the printer driver (Step S570), and terminates the main routine.

Referring now to Fig. 9, the details of normal image processing, performed when no working color space has been designated, is described. In the normal image processing shown in Fig. 9, processes identical to processes performed during image processing on the basis of working color space information described previously with reference to Fig. 8, namely, Steps 600 -630, Step S660 and Step S670, are identical to Steps S500 -S530, Step S560 and Step S570 described previously with reference to Fig. 8; in the drawing these are indicated by broken lines, and not described.

In Step S630, CPU 200, having performed the dRGB-XYZ color conversion process, performs a process to convert the image data GD color space from the XYZ color space to the wRGB color space, namely, an XYZ-wRGB color conversion process (Step S640). CPU 200 handles matrix values of a predetermined working color space, included in image processing control information GI, as matrix values of matrix N when performing the inverse matrix operation. CPU 200 performs inverse gamma correction using a predetermined gamma correction value that is a gamma correction value for the predetermined working color space included in image processing control information GI (Step S650).

CPU 200 then executes Step S660, outputs the processed wRGB color space image data GD to the printer driver (Step S670), and terminates the main routine.

The following description of the print data generating process makes reference to Fig. 10. The process is typically realized as so-called printer driver function. CPU 200 acquires the processed image data GD (Step S700), and switches the RGB-CMYK color conversion table to the RGB-CMYK color conversion table corresponding to the working color space RGB designated by the image processing control information GI (Step S71 0). Specifically, a multiplicity of RGB-CMYK conversion LUTs corresponding to a multiplicity of RGB color spaces have been stored on HDD 220 when the printer driver is installed on personal computer 20, for example; and CPU 200 selects the appropriate RGB-CMYK conversion LUT.

Referring to the switched RGB-CMYK conversion look-up table (LUT), CPU 200 converts RGB image data to CMYK image data (Step S720). That is, it converts image data GD consisting of R · G · B tone values to tone value data for the colors used by printer 30, for example, the six colors C · M · Y · K · LC · LM.

CPU 200 then performs a halftoning process (tone number conversion process) on the CMYK image data (Step S730), sends the image data GD as raster data to the print control portion (not shown) of printer 30, executes print out, and terminates the main routine. An error diffusion method or systematic dithering method is typically used as the method for the halftoning process.

By means of image processing by personal computer 20 in accordance with Embodiment 2 described hereinabove, a working color space for performing image processing is established on the basis of image processing control information GI contained in the image file GF, enabling image quality adjustment processing to be performed on image data GD. Thus, by designating as the working color space an RGB color space having a wider gamut than the dRGB color space of the image data GD (the RGB color space used by digital still camera 12), data values (color values) that are out of gamut of the dRGB color space, and particularly negative data values (color values), can be handled as valid, to give printed results having higher saturation. That is, printed results having higher saturation can be obtained by using color information that cannot be reproduced in the dRGB color space due to being out of gamut.

By means of the personal computer 20 pertaining to Embodiment 2, the RGB-CMYK color conversion LUT used by the printer driver can be switched to the corresponding RGB-CMYK conversion LUT with reference to the wRGB color space which the is working color space. This makes it possible to eliminate the color conversion process from the wRGB color space to the pRGB color space in personal computer 20, so that image processing speed can be increased.

### D. Other embodiments

During image processing in personal computer 20, in the event that no working color space is designated, of the automatic image quality adjustments, those image quality adjustments made using image quality adjustment parameters that directly modify image quality parameters can be performed subsequent to the YCbCr-RGB color conversion process. Since no working color space is designated, performing image processing (image quality adjustment) in the RGB color space of image data GD, i.e. the RGB color space of DSC 12 (dRGB) will result in the color values of the image data GD being preserved.

In each of the image processing embodiments described hereinabove, a color printer 30 is used as the output device; however, a CRT, LCD, projector or other display device could be used as the output device. In this case, depending on the display device used as the output device, an image processing program (display driver) for executing the image processing described with reference to Fig. 4 etc. could be run, for example. Or, where functioning as a CRT or other such computer display device, the image processing program could be run on the computer. In any case, the image data GD which is ultimately output will have an RGB color space, rather than a CMYK color space.

In this case, in a manner analogous to being able to output image data GD subjected to image quality adjustment in a selected working color space to a color printer 30, image data GD subjected to image quality adjustment in a selected working color space may be displayed on a CRT or other display device. Thus, by including parameters appropriate for a CRT or other display device in the image processing control information GI of an image file GF, or by including parameters optimized for the display characteristics of individual display devices, image data GD generated by a digital still camera 12 may be displayed more accurately.

The preceding embodiments describe generation of image files GF by a digital still camera 20, but image file GF could instead be generated with a digital video camera (DVC), scanner or other such input device (image file generating device). Where image files are generated by a digital video camera, these may be image files that contain still image data and output control information, or video files that contain video data and output control information, in MPEG or other format. Where video files are used, output control may be performed with reference to output control information for some or all of the video frames.

In the embodiments described hereinabove, the use of an RGB color space as the working color space is described, but instead a YCbCr color space could be used as the working color space. While RGB color space data (RGB data) is output to a color printer, YCbCr color space data (YCbCr data) could be output instead. In this case the personal computer 20 will be provided with an RGB-YCbCr color conversion function, and a YCbCr-CMYK color conversion function (e.g. LUTs).

The parameters given hereinabove are merely exemplary, and imply no limitation of the invention herein to these parameters. The matrices S, M, N⁻¹, M' and N'⁻¹ given the Equations are likewise merely exemplary, and may be modified appropriately with reference to working color space, target color space, color space utilizable by color printer 30, etc.

While the preceding embodiments describe the use of a digital still camera 12 as the image file generating device, a scanner, digital video camera, or other device could be used instead Where a scanner is used, designation of image processing control information GI for image file GF may be performed on computer 20, or on the scanner independently, where the scanner is provided with a Preset button having settings information pre-assigned to it for setting information, or a Settings button and a display screen for making settings.

While Embodiment 1 describes an Exif format file as an exemplary image file GF, the image file format herein is not limited thereto. It is possible to use any image file that, at a minimum, includes image data GD for output by an output device, and information relating to a working color space for performing image processing (image quality adjustment) in an image processing device, such as a personal computer 20. The use of such files enables the original saturation of the image data GD to be reproduced by the output device.

Image files GF containing image data GD and image processing control information GI are herein considered to include files created by generating association data associating with image processing control information GI, storing the image data GD and image processing control information GI in separate files, but enabling the image data GD and image processing control information GI to be associated by referring to this association data during image processing. While in this case image data GD and image processing control information GI are stored in separate files, during image processing using the image processing control information Gl, the image data GD and image processing control information Gl are indivisibly united, so functionality is substantially the same as with storage in a single file. That is, the use of associated image data GD and image processing control information GI --at least during image processing-- is included in the definition of image file GF herein. Video files stored on optical media such as CD-ROM, CD-R, DVD-ROM and DVD-RAM are also included.

While the image data generating device and image data output device pertaining to the invention have been shown and described with reference to certain preferred embodiments, the embodiments herein are intended to aid in understanding of the invention, and should not be construed as limiting thereof. It is intended that the present invention cover modifications and improvements provided they fall within the scope of the claims and their equivalents.

## Claims

1. An image processing device (20) comprising:
an image data acquisition unit for acquiring image data (GD, 101) and working color space designating information from an external input device (12), said working color space designating information being associated with said image data (GD, 101) and
designating a working color space into which the image data (GD, 101) are to be transformed and then further image-processed including color-space transformation in the image processing device (20); and
an image processing unit (123) that uses the working color space designating information to perform processing of said image data (GD, 101) in the designated working color space.

2. An image processing device (20) according to claim 1, wherein said image data (GD, 101) are additionally associated with image processing control data (102) for designating image processing conditions in said image processing unit (123);
wherein image processing by said image processing unit (123) is performed on the basis of said image processing control data (102).

3. An image processing device (20) according to claim 1, wherein
in the event that said image processing unit (123) is unable to use said working color space designating information, processing of said image data (GD, 101) is performed using a predetermined color space.

4. An image processing device (20) according to claim 1, wherein
in the event that said image processing unit (123) is unable to use said working color space designating information, processing of said image data (GD, 101) is performed using the color space defining said acquired image data (GD, 101).

5. An image processing device (20) according to claim 1, further comprising:
a multitude of output image data generating means for generating, from said processed image data (GD, 101), output image data for transmission to an output device;
an output image generating means selection unit for selecting from among said multitude of output image data generating means a said output image data generating means corresponding to said working color space; and
a transmitting unit for transmitting to said output device output image data generated by said selected output image generating means.

6. An image processing device (20) according to claim 5, wherein said multitude of output image data generating means use color conversion tables to convert said processed image data (GD, 101) to said output image data.

7. An image processing device (20) according to claim 1, further comprising:
a color space conversion unit for converting the color space of said processed image data (GD, 101) to predetermined color space; and
an output image data generating unit for converting image data (GD, 101) of the predetermined color space to output image data of a color space used by an output device.

8. An image processing device (20) according to claim 6 or 7, wherein said image data (GD, 101) is additionally associated with image processing control data (102) designating image processing conditions for said image processing unit (123);
wherein image processing by said image processing unit (123) is performed on the basis of said image processing control data (102).

9. An image processing device (20) according to claim 1, comprising:
a first color conversion unit for converting the color space of the acquired image data (GD, 101) to a first RGB color space in accordance with said working color space designating information;
said image processing unit (123) processing said image data (GD, 101) in said first RGB color space;
a color space information acquisition unit for acquiring information about an RGB color space used by an output image processing device that generates from said processed image data (GD, 101) for output; and
a second color conversion unit that, in the event that the RGB color space used by said output image processing device is a second RGB color space different from said first RGB color space, converts the color space of said processed image data (GD, 101) from said first RGB color space to said second RGB color space on the basis of said acquired color space information.

10. An image processing device (20) according to claim 9, wherein
said acquired image data (GD, 101) is image data (GD, 101) defined in a third RGB color space; and
said image processing unit (123), in the event of being unable to use said working color space designating information, processes said image data (GD, 101) in said third RGB color space.

11. An image processing device (20) according to claim 10, wherein said first RGB color space has at least in a portion of the gamut thereof a color representation range wider than said third RGB color space.

12. An image processing device (20) according to claim 1, comprising:
a first color conversion unit for converting the color space of the acquired image data (GD, 101) to a YCbCr color space in accordance with said working color space designating information;
said image processing unit (123) processing said image data (GD, 101) in said YCbCr color space;
a color space information acquisition unit for acquiring information about an RGB color space used by an output image processing device that generates from said processed image data (GD, 101) for output; and
a second color conversion unit for converting, on the basis of said acquired color space information, the color space of said processed image data (GD, 101) from said YCbCr color space to an RGB color space used by said output image device.

13. An image processing device (20) according to claim 1, comprising:
a first color conversion unit for converting the color space of the acquired image data (GD, 101) to an RGB color space in accordance with said working color space designating information;
said image processing unit (123) processing said image data (GD, 101) in said RGB color space;
a color space information acquisition unit for acquiring information about a YCbCr color space used by an output image processing device that generates from said processed image data (GD, 101) for output; and
a second color conversion unit for converting, on the basis of said acquired color space information, the color space of said processed image data (GD, 101) from said RGB color space to said YCbCr color space.

14. An image processing device (20) according to claim 1, comprising:
a first color conversion unit for converting the color space of the acquired image data (GD, 101) to a first YCbCr color space in accordance with said working color space designating information;
said image processing unit (123) processing said image data (GD, 101) in said first YCbCr color space;
a color space information acquisition unit for acquiring information about a YCbCr color space used by an output image processing device that generates from said processed image data (GD, 101) for output; and
a second color conversion unit that, in the event that the YCbCr color space used by said output image processing device is a second YCbCr color space different from said first YCbCr color space, converts the color space of said processed image data (GD, 101) from said first YCbCr color space to said second YCbCr color space on the basis of said acquired color space information.

15. An image processing system, comprising an image processing device according to any one of claims 1 to 14 and an output data generating means,
wherein said output data generating means comprises:
a color conversion unit that uses a color conversion table to convert the color space of said processed image data (GD, 101) to the reproducible color space of an output device; and
a color conversion table modification unit for modifying, with reference to said working color space, the color conversion table used by said color conversion unit.

16. A program for executing processing of image data (GD, 101), which, when run on a computer, performs the following steps:
acquiring image data (GD, 101) and working color space designating information from an external input device (12), said working color space designating information being associated with said image data (GD, 101) and designating a working color space into which the image data (GD, 101) are to be transformed and then further image-processed including color-space transformation; and
using the working color space designating information to execute processing of said image data (GD, 101) in the designated working color space.

17. A program according to claim 16, further performing the following steps:
converting the color space of the acquired image data (GD, 101) to a first RGB color space in accordance with said working color space designating information;
processing said image data (GD, 101) in said first color space;
acquiring information about an RGB color space used by an output image processing device that generates from said processed image data (GD, 101) for output; and
in the event that the RGB color space used by said output image processing device is a second RGB color space different from said first RGB color space, converting the color space of said processed image data (GD, 101) from said first RGB color space to said second RGB color space on the basis of said acquired information.

## Patentansprüche

1. Bildverarbeitungsvorrichtung (20), die aufweist:
eine Bilddatenerlangungseinheit zum Erlangen von Bilddaten (GD, 101) und Arbeitsfarbraumbezeichnungsinformationen von einer externen Eingabevorrichtung (12), wobei die Arbeitsfarbraumbezeichnungsinformationen den Bilddaten (GD, 101) zugeordnet sind und einen Arbeitsfarbraum bezeichnen, in den die Bilddaten (GD, 101) zu transformieren und dann weiter einer Bildverarbeitung zu unterziehen sind, die eine Farbraumtransformation in der Bildverarbeitungsvorrichtung (20) enthält; und
eine Bildverarbeitungseinheit (123), die die Arbeitsfarbraumbezeichnungsinformationen verwendet, um eine Verarbeitung der Bilddaten (GD, 101) in dem bezeichneten Arbeitsfarbraum durchzuführen.

2. Bildverarbeitungsvorrichtung (20) nach Anspruch 1, wobei die Bilddaten (GD, 101) zusätzlich Bildverarbeitungssteuerdaten (102) zum Bezeichnen von Bildverarbeitungsbedingungen in der Bildverarbeitungseinheit (123) zugeordnet sind;
wobei eine Bildverarbeitung mittels der Bildverarbeitungseinheit (123) auf der Grundlage der Bildverarbeitungssteuerdaten (102) durchgeführt wird.

3. Bildverarbeitungsvorrichtung (20) nach Anspruch 1, wobei
in dem Fall, in dem die Bildverarbeitungseinheit (123) nicht in der Lage ist, die Arbeitsfarbraumbezeichnungsinformationen zu verwenden, eine Verarbeitung der Bilddaten (GD, 101) unter Verwendung eines vorbestimmten Farbraums durchgeführt wird.

4. Bildverarbeitungsvorrichtung (20) nach Anspruch 1, wobei
in dem Fall, in dem die Bildverarbeitungseinheit (123) nicht in der Lage ist, die Arbeitsfarbraumbezeichnungsinformationen zu verwenden, eine Verarbeitung der Bilddaten (GD, 101) unter Verwendung desjenigen Farbraums durchgeführt wird, der die erlangten Bilddaten (GD, 101) definiert.

5. Bildverarbeitungsvorrichtung (20) nach Anspruch 1, die außerdem aufweist:
mehrere Ausgangsbilddatenerzeugungseinrichtungen zum Erzeugen von Ausgangsbilddaten aus den verarbeiteten Bilddaten (GD, 101) zur Übertragung an eine Ausgabevorrichtung;
eine Ausgangsbilderzeugungseinrichtungsauswahleinheit zum Auswählen einer Ausgangsbilddatenerzeugungseinrichtung aus den Ausgangsbilddatenerzeugungseinrichtungen, die dem Arbeitsfarbraum entspricht; und
eine Übertragungseinheit zum Übertragen von Ausgangsbilddaten, die von der ausgewählten Ausgangsbilderzeugungseinrichtung erzeugt werden, an die Ausgabevorrichtung.

6. Bildverarbeitungsvorrichtung (20) nach Anspruch 5, wobei die Ausgangsbilddatenerzeugungseinrichtungen Farbumwandlungstabellen verwenden, um die verarbeiteten Bilddaten (GD, 101) in die Ausgangsbilddaten umzuwandeln.

7. Bildverarbeitungsvorrichtung (20) nach Anspruch 1, die außerdem aufweist:
eine Farbraumumwandlungseinheit zum Umwandeln des Farbraums der verarbeiteten Bilddaten (GD, 101) in einen vorbestimmten Farbraum; und
eine Ausgangsbilddatenerzeugungseinheit zum Umwandeln von Bilddaten (GD, 101) des vorbestimmten Farbraums in Ausgangsbilddaten eines Farbraums, der von einer Ausgabevorrichtung verwendet wird.

8. Bildverarbeitungsvorrichtung (20) nach Anspruch 6 oder 7, wobei die Bilddaten (GD, 101) zusätzlich Bildverarbeitungssteuerdaten (102) zugeordnet sind, die Bildverarbeitungsbedingungen für die Bildverarbeitungseinheit (123) bezeichnen;
wobei eine Bildverarbeitung mittels der Bildverarbeitungseinheit (123) auf der Grundlage der Bildverarbeitungssteuerdaten (102) durchgeführt wird.

9. Bildverarbeitungsvorrichtung (20) nach Anspruch 1, die aufweist:
eine erste Farbumwandlungseinheit zum Umwandeln des Farbraums der erlangten Bilddaten (GD, 101) in einen ersten RGB-Farbraum entsprechend den Arbeitsfarbraumbezeichnungsinformationen;
die Bildverarbeitungseinheit (123), die die Bilddaten (GD, 101) in dem ersten RGB-Farbraum verarbeitet;
eine Farbrauminformationserlangungseinheit zum Erlangen von Informationen hinsichtlich eines RGB-Farbraums, der von einer Ausgangsbildverarbeitungsvorrichtung verwendet wird, die aus den verarbeiteten Bilddaten (GD, 101) zur Ausgabe erzeugt; und
eine zweite Farbumwandlungseinheit, die in dem Fall, in dem der RGB-Farbraum, der von der Ausgangsbildverarbeitungsvorrichtung verwendet wird, ein zweiter RGB-Farbraum ist, der sich von dem ersten RGB-Farbraum unterscheidet, den Farbraum der verarbeiteten Bilddaten (GD, 101) auf der Grundlage der erlangten Farbrauminformationen von dem ersten RGB-Farbraum in den zweiten RGB-Farbraum umwandelt.

10. Bildverarbeitungsvorrichtung (20) nach Anspruch 9, wobei
die erlangten Bilddaten (GD, 101) Bilddaten (GD, 101) sind, die in einem dritten RGB-Farbraum definiert sind; und
die Bildverarbeitungseinheit (123) in dem Fall, in dem sie nicht in der Lage ist, die Arbeitsfarbraumbezeichnungsinformationen zu verwenden, die Bilddaten (GD, 101) in dem dritten RGB-Farbraum verarbeitet.

11. Bildverarbeitungsvorrichtung (20) nach Anspruch 10, wobei der erste RGB-Farbraum mindestens in einem Teil seines Farbumfangs einen Farbrepräsentationsbereich aufweist, der größer als der dritte RGB-Farbraum ist.

12. Bildverarbeitungsvorrichtung (20) nach Anspruch 1, die aufweist:
eine erste Farbumwandlungseinheit zum Umwandeln des Farbraums der erlangten Bilddaten (GD, 101) in einen YCbCr-Farbraum entsprechend den Arbeitsfarbraumbezeichnungsinformationen;
die Bildverarbeitungseinheit (123), die die Bilddaten (GD, 101) in dem YCbCr-Farbraum verarbeitet;
eine Farbrauminformationserlangungseinheit zum Erlangen von Informationen hinsichtlich eines RGB-Farbraums, der von einer Ausgangsbildverarbeitungsvorrichtung verwendet wird, die aus den verarbeiteten Bilddaten (GD, 101) zur Ausgabe erzeugt; und
eine zweite Farbumwandlungseinheit zum Umwandeln des Farbraums der verarbeiteten Bilddaten (GD, 101) von dem YCbCr-Farbraum in einen RGB-Farbraum, der von der Ausgangsbildvorrichtung verwendet wird, auf der Grundlage der erlangten Farbrauminformationen.

13. Bildverarbeitungsvorrichtung (20) nach Anspruch 1, die aufweist:
eine erste Farbumwandlungseinheit zum Umwandeln des Farbraums der erlangten Bilddaten (GD, 101) in einen RGB-Farbraum entsprechend den Arbeitsfarbraumbezeichnungsinformationen;
die Bildverarbeitungseinheit (123), die die Bilddaten (GD, 101) in dem RGB-Farbraum verarbeitet;
eine Farbrauminformationserlangungseinheit zum Erlangen von Informationen hinsichtlich eines YCbCr-Farbraums, der von einer Ausgangsbildverarbeitungsvorrichtung verwendet wird, die aus den verarbeiteten Bilddaten (GD, 101) zur Ausgabe erzeugt; und
eine zweite Farbumwandlungseinheit zum Umwandeln des Farbraums der verarbeiteten Bilddaten (GD, 101) von dem RGB-Farbraum in den YCbCr-Farbraum auf der Grundlage der erlangten Farbrauminformationen.

14. Bildverarbeitungsvorrichtung (20) nach Anspruch 1, die aufweist:
eine erste Farbumwandlungseinheit zum Umwandeln des Farbraums der erlangten Bilddaten (GD, 101) in einen ersten YCbCr-Farbraum entsprechend den Arbeitsfarbraumbezeichnungsinformationen;
die Bildverarbeitungseinheit (123), die die Bilddaten (GD, 101) in dem ersten YCbCr-Farbraum verarbeitet;
eine Farbrauminformationserlangungseinheit zum Erlangen von Informationen hinsichtlich eines YCbCr-Farbraums, der von einer Ausgangsbildverarbeitungsvorrichtung verwendet wird, die aus den verarbeiteten Bilddaten (GD, 101) zur Ausgabe erzeugt; und
eine zweite Farbumwandlungseinheit, die in dem Fall, in dem der YCbCr-Farbraum, der von der Ausgangsbildverarbeitungsvorrichtung verwendet wird, ein zweiter YCbCr-Farbraum ist, der sich von dem ersten YCbCr-Farbraum unterscheidet, den Farbraum der verarbeiteten Bilddaten (GD, 101) auf der Grundlage der erlangten Farbrauminformationen von dem ersten YCbCr-Farbraum in den zweiten YCbCr-Farbraum umwandelt.

15. Bildverarbeitungssystem, das eine Bildverarbeitungsvorrichtung nach einem der Ansprüche 1 bis 14 und eine Ausgangsdatenerzeugungseinrichtung aufweist,
wobei die Ausgangsdatenerzeugungseinrichtung aufweist:
eine Farbumwandlungseinheit, die eine Farbumwandlungstabelle verwendet, um den Farbraum der verarbeiteten Bilddaten (GD, 101) in den reproduzierbaren Farbraum einer Ausgabevorrichtung umzuwandeln; und
eine Farbumwandlungstabellenmodifikationseinheit zum Modifizieren der Farbumwandlungstabelle, die von der Farbumwandlungseinheit verwendet wird, mit Bezug auf den Arbeitsfarbraum.

16. Programm zum Ausführen einer Verarbeitung von Bilddaten (GD, 101), das, wenn es auf einem Computer abläuft, die folgenden Schritte durchführt:
Erlangen von Bilddaten (GD, 101) und Arbeitsfarbraumbezeichnungsinformationen von einer externen Eingabevorrichtung (12), wobei die Arbeitsfarbraumbezeichnungsinformationen den Bilddaten (GD, 101) zugeordnet sind und einen Arbeitsfarbraum bezeichnen, in den die Bilddaten (GD, 101) zu transformieren und anschließend außerdem einer Bildverarbeitung zu unterziehen sind, die eine Farbraumtransformation enthält; und
Verwenden der Arbeitsfarbraumbezeichnungsinformationen, um eine Verarbeitung der Bilddaten (GD, 101) in dem bezeichneten Arbeitsfarbraum auszuführen.

17. Programm nach Anspruch 16, das außerdem die folgenden Schritte durchführt:
Umwandeln des Farbraums der erlangten Bilddaten (GD, 101) in einen ersten RGB-Farbraum entsprechend den Arbeitsfarbraumbezeichnungsinformationen;
Verarbeiten der Bilddaten (GD, 101) in dem ersten Farbraum;
Erlangen von Informationen hinsichtlich eines RGB-Farbraums, der von einer Ausgangsbildverarbeitungsvorrichtung verwendet wird, die aus den verarbeiteten Bilddaten (GD, 101) zur Ausgabe erzeugt; und
in dem Fall, in dem der RGB-Farbraum, der von der Ausgangsbildverarbeitungsvorrichtung verwendet wird, ein zweiter RGB-Farbraum ist, der sich von dem ersten RGB-Farbraum unterscheidet, Umwandeln des Farbraums der verarbeiteten Bilddaten (GD, 101) von dem ersten RGB-Farbraum in den zweiten RGB-Farbraum auf der Grundlage der erlangten Informationen.

## Revendications

1. Dispositif de traitement d'image (20) comprenant :
une unité d'acquisition de données image pour acquérir des données image (GD, 101) et des informations de désignation d'espace colorimétrique de travail d'un dispositif d'entrée externe (12), lesdites informations de désignation d'espace colorimétrique de travail étant associées auxdites données image (GD, 101) et désignant un espace colorimétrique de travail dans lequel les données image (GD, 101) doivent être transformées puis subir un traitement d'image comprenant une transformation de l'espace colorimétrique dans le dispositif de traitement d'image (20) ; et
une unité de traitement d'image (123) qui utilise les informations de désignation d'espace colorimétrique de travail pour effectuer le traitement desdites données image (GD, 101) dans l'espace colorimétrique de travail désigné.

2. Dispositif de traitement d'image (20) selon la revendication 1, dans lequel lesdites données image (GD, 101) sont en outre associées à des données de commande de traitement d'image (102) pour désigner des conditions de traitement d'image dans ladite unité de traitement d'image (123) ;
dans lequel le traitement d'image par ladite unité de traitement d'image (123) est effectué en se basant sur lesdites données de commande de traitement d'image (102).

3. Dispositif de traitement d'image (20) selon la revendication 1, dans lequel dans le cas où ladite unité de traitement d'image (123) est incapable d'utiliser lesdites informations de désignation d'espace colorimétrique de travail, le traitement desdites données image (GD, 101) est effectué en utilisant un espace colorimétrique prédéterminé.

4. Dispositif de traitement d'image (20) selon la revendication 1, dans lequel dans le cas où ladite unité de traitement d'image (123) est incapable d'utiliser lesdites informations de désignation d'espace colorimétrique de travail, le traitement desdites données image (GD, 101) est effectué en utilisant l'espace colorimétrique définissant lesdites données image acquises (GD, 101).

5. Dispositif de traitement d'image (20) selon la revendication 1, comprenant en outre:
une multitude de moyens de génération de données image de sortie pour générer, à partir desdites données image traitées (GD, 101), des données image de sortie pour transmission à un dispositif de sortie ;
une unité de sélection de moyens de génération d'image de sortie pour sélectionner parmi ladite multitude de moyens de génération de données image de sortie un dit moyen de génération de données image de sortie correspondant audit espace colorimétrique de travail ; et
une unité de transmission pour transmettre audit dispositif de sortie des données image de sortie générées par ledit moyen de génération d'image de sortie sélectionné.

6. Dispositif de traitement d'image (20) selon la revendication 5, dans lequel ladite multitude de moyens de génération de données image de sortie utilise des tables de conversion de couleur pour convertir lesdites données image traitées (GD, 101) en lesdites données image de sortie.

7. Dispositif de traitement d'image (20) selon la revendication 1, comprenant en outre :
une unité de conversion d'espace colorimétrique pour convertir l'espace colorimétrique desdites données image traitées (GD, 101) en un espace colorimétrique prédéterminé ; et
une unité de génération de données image de sortie pour convertir des données image (GD, 101) de l'espace colorimétrique prédéterminé en données image de sortie d'un espace colorimétrique utilisé par un dispositif de sortie.

8. Dispositif de traitement d'image (20) selon la revendication 6 ou 7, dans lequel lesdites données image (GD, 101) sont en outre associées à des données de commande de traitement d'image (102) désignant des conditions de traitement d'image pour ladite unité de traitement d'image (123) ;
dans lequel le traitement d'image par ladite unité de traitement d'image (123) est réalisé en se basant sur lesdites données de commande de traitement d'image (102).

9. Dispositif de traitement d'image (20) selon la revendication 1, comprenant :
une première unité de conversion de couleur pour convertir l'espace colorimétrique des données image acquises (GD, 101) en un premier espace colorimétrique RGB en conformité avec lesdites informations de désignation d'espace colorimétrique de travail ;
ladite unité de traitement d'image (123) traitant lesdites données image (GD, 101) dans ledit premier espace colorimétrique RGB ;
une unité d'acquisition d'informations d'espace colorimétrique pour acquérir des informations à propos d'un espace colorimétrique RGB utilisé par un dispositif de traitement d'image de sortie qui génère à partir desdites données image traitées (GD, 101) une sortie ; et
une seconde unité de conversion de couleur qui, dans le cas où l'espace colorimétrique RGB utilisé par ledit dispositif de traitement d'image de sortie est un deuxième espace colorimétrique RGB différent dudit premier espace colorimétrique RGB, convertit l'espace colorimétrique desdites données image traitées (GD, 101) dudit premier espace colorimétrique RGB en ledit deuxième espace colorimétrique RGB en se basant sur lesdites informations d'espace colorimétrique acquises.

10. Dispositif de traitement d'image (20) selon la revendication 9, dans lequel lesdites données image acquises (GD, 101) sont des données image (GD, 101) définies dans un troisième espace colorimétrique RGB ; et
ladite unité de traitement d'image (123), dans le cas où elle ne peut pas utiliser lesdites informations de désignation d'espace colorimétrique de travail, traite lesdites données image (GD, 101) dans ledit troisième espace colorimétrique RGB.

11. Dispositif de traitement d'image (20) selon la revendication 10, dans lequel ledit premier espace colorimétrique RGB a au moins dans une portion du gamut de celui-ci une plage de représentation de couleur plus large que ledit troisième espace colorimétrique RGB.

12. Dispositif de traitement d'image (20) selon la revendication 1, comprenant :
une première unité de conversion de couleur pour convertir l'espace colorimétrique des données image acquises (GD, 101) en un espace colorimétrique YCbCr en conformité avec lesdites informations de désignation d'espace colorimétrique de travail ;
ladite unité de traitement d'image (123) traitant lesdites données image (GD, 101) dans ledit espace colorimétrique YCbCr ;
une unité d'acquisition d'informations d'espace colorimétrique pour acquérir des informations à propos d'un espace colorimétrique RGB utilisé par un dispositif de traitement d'image de sortie qui génère à partir desdites données image traitées (GD, 101) une sortie ; et
une seconde unité de conversion de couleur pour convertir, en se basant sur lesdites informations d'espace colorimétrique acquises, l'espace colorimétrique desdites données image traitées (GD, 101) dudit espace colorimétrique YCbCr en un espace colorimétrique RGB utilisé par ledit dispositif d'image de sortie.

13. Dispositif de traitement d'image (20) selon la revendication 1, comprenant :
une première unité de conversion de couleur pour convertir l'espace colorimétrique des données image acquises (GD, 101) en un espace colorimétrique RGB en conformité avec lesdites informations de désignation d'espace colorimétrique de travail ;
ladite unité de traitement d'image (123) traitant lesdites données image (GD, 101) dans ledit espace colorimétrique RGB ;
une unité d'acquisition d'informations d'espace colorimétrique pour acquérir des informations à propos d'un espace colorimétrique YCbCr utilisé par un dispositif de traitement d'image de sortie qui génère à partir desdites données image traitées (GD, 101) une sortie ; et
une seconde unité de conversion de couleur pour convertir, en se basant sur lesdites informations d'espace colorimétriques acquises, l'espace colorimétrique desdites données image traitées (GD, 101) dudit espace colorimétrique RGB en ledit espace colorimétrique YCbCr.

14. Dispositif de traitement d'image (20) selon la revendication 1, comprenant :
une première unité de conversion de couleur pour convertir l'espace colorimétrique des données image acquises (GD, 101) en un premier espace colorimétrique YCbCr en conformité avec lesdites informations de désignation d'espace colorimétrique de travail ;
ladite unité de traitement d'image (123) traitant lesdites données image (GD, 101) dans ledit premier espace colorimétrique YCbCr ;
une unité d'acquisition d'informations d'espace colorimétrique pour acquérir des informations à propos d'un espace colorimétrique YCbCr utilisé par un dispositif de traitement d'image de sortie qui génère à partir desdites données image traitées (GD, 101) une sortie ; et
une seconde unité de conversion de couleur qui, dans le cas où l'espace colorimétrique YCbCr utilisé par ledit dispositif de traitement d'image de sortie est un deuxième espace colorimétrique YCbCr différent dudit premier espace colorimétrique YCbCr, convertit l'espace colorimétrique desdites données image traitées (GD, 101) dudit premier espace colorimétrique YCbCr en ledit deuxième espace colorimétrique YCbCr en se basant sur lesdites informations d'espace colorimétrique acquises.

15. Système de traitement d'image, comprenant un dispositif de traitement d'image selon l'une quelconque des revendications 1 à 14 et un moyen de génération de données de sortie,
dans lequel ledit moyen de génération de données de sortie comprend :
une unité de conversion de couleur qui utilise une table de conversion de couleur pour convertir l'espace colorimétrique desdites données image traitées (GD, 101) en l'espace colorimétrique reproductible d'un dispositif de sortie ; et
une unité de modification de table de conversion de couleur pour modifier, en référence audit espace colorimétrique de travail, la table de conversion de couleur utilisée par ladite unité de conversion de couleur.

16. Programme pour exécuter le traitement de données image (GD, 101), qui, lorsqu'il est exécuté sur un ordinateur, effectue les étapes suivantes :
acquisition de données image (GD, 101) et d'informations de désignation d'espace colorimétrique de travail d'un dispositif d'entrée externe (12), lesdites informations de désignation d'espace colorimétrique de travail étant associées auxdites données image (GD, 101) et désignant un espace colorimétrique de travail dans lequel les données image (GD, 101) doivent être transformées puis subir un traitement d'image comprenant une transformation de l'espace colorimétrique ; et
utilisation des informations de désignation d'espace colorimétrique de travail pour exécuter le traitement desdites données image (GD, 101) dans l'espace colorimétrique de travail désigné.

17. Programme selon la revendication 16, effectuant en outre les étapes suivantes :
conversion de l'espace colorimétrique des données image acquises (GD, 101) en un premier espace colorimétrique RGB en conformité avec lesdites informations de désignation d'espace colorimétrique de travail ;
traitement desdites données image (GD, 101) dans ledit premier espace colorimétrique ;
acquisition d'informations à propos d'un espace colorimétrique RGB utilisé par un dispositif de traitement d'image de sortie qui génère à partir desdites données image traitées (GD, 101) une sortie, et
dans le cas où l'espace colorimétrique RGB utilisé par ledit dispositif de traitement d'image de sortie est un deuxième espace colorimétrique RGB différent dudit premier espace colorimétrique RGB, conversion de l'espace colorimétrique desdites données image traitées (GD, 101) dudit premier espace colorimétrique RGB en ledit deuxième espace colorimétrique RGB en se basant sur lesdites informations acquises.
